Europäisches Patentamt

European Patent Office

Office européen des brevets

(11) Publication number: **0 268 291 B1**

# EUROPEAN PATENT SPECIFICATION

(45) Date of publication of patent specification: **02.01.92**     (51) Int. Cl.⁵: **B29D 17/00**, B29C 45/17

(21) Application number: **87117068.4**

(22) Date of filing: **19.11.87**

(54) **Mold for producing discs.**

(30) Priority: **20.11.86 JP 277524/86**

(43) Date of publication of application:
**25.05.88 Bulletin 88/21**

(45) Publication of the grant of the patent:
**02.01.92 Bulletin 92/01**

(84) Designated Contracting States:
**AT BE CH DE FR GB LI NL**

(56) References cited:
**EP-A- 0 177 991**
**US-A- 3 632 280**
**US-A- 4 185 955**

**PATENT ABSTRACTS OF JAPAN, vol. 10, no. 155 (M-485)[2211], 4th June 1986; & JP-A-61 10 421 (MATSUSHITA DENKI SANGYO K.K.) 17-01-1986**

**PATENT ABSTRACTS OF JAPAN, vol. 9, no. 107 (M-378)[1830], 11th May 1985; & JP-A-59 230 731 (MEIKI SEISAKUSHO K.K.) 25-12-1984**

(73) Proprietor: **KABUSHIKI KAISHA MEIKI SEISAKUSHO**
**2, Ohne, Kitasaki-cho**
**Ohbu-shi, Aichi-ken(JP)**

(72) Inventor: **Shimojo, Shunichi 2-16, Aza Kamiwariki**
**Ohaza Morioka Higashiura-cho**
**Chita-gun Aichi-ken(JP)**
Inventor: **Asai, Ikuo**
**2-85, Shinjuku Meito-ku**
**Nagoya-shi Aichi-ken(JP)**

(74) Representative: **Reinhard, Skuhra, Weise**
**Friedrichstrasse 31**
**W-8000 München 40(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a mold according to the first part of claim 1 used in an injection molding apparatus for making discs. More particularly, it relates to means for retaining a stamper for encoding a signal in a mold used for the injection molding of video, audio or memory discs (hereinafter referred to as "discs").

Japanese Patent Publication No. 58214/1983 and Japanese Patent Laid-Open Publication No. 230731/1984 disclose molds which are used for the injection molding of discs. These molds are provided with stamper retainer which retain the inner and outer peripheries of a stamper for supporting it on one side of a cavity defined between the two halves of the mold. The outer stamper retainer is secured to the movable mold half by screws.

When the mold is used for making compact discs, it is usually used for making various kinds of discs every day. As a result, it is necessary to change the stamper as often as five or six times a day. It is sometimes possible that the stamper may have to be changed as often as several tens of times a day.

When the stamper has to be changed, it is necessary to loosen the screws and remove the stamper retainers from its inner and outer peripheries manually before another stamper can be installed. The time which is required for removing one stamper and installing another is unnegligible from the standpoint of productivity. Another problem that is more serious is that the retainer for retaining the outer periphery of the stamper is likely to contact and thereby damage the wall surface of the mold cavity when it is installed or removed. The damaged cavity surface makes the mold unusable for the precision molding of discs.

It is an object of this invention to provide a disc-producing mold which is free from the drawbacks of the prior art as hereinabove pointed out.

This object is essentially attained by a mold comprising a pair of mold halves which are relatively movable to, and away from, each other, and an inner stamper retainer and an outer stamper retainer which are provided on one of the mold halves for retaining the inner and outer peripheries, respectively, of a stamper, characaterized by further including first means provided on the one mold half for supporting the outer stamper retainer thereon and second means provided on the other mold half for supporting the outer stamper retainer thereon, the first and second supporting means being operationally associated with each other so that while the mold halves are in contact with each other, the first supporting means may release the outer stamper retainer to enable the second supporting means to support it on the other mold half.

According to a preferred aspect of this invention, each of the first and second supporting means comprises a pin having a diametrically enlarged portion and the outer stamper retainer is provided with a rotatable ring having a plurality of elongated slots into which the pin is engageable on either side of the ring. The pin is axially movable by compressed air or a spring, or both.

The outer stamper retainer in the mold of this invention can be removed from the outer periphery of the stamper without requiring any manual work, while it is kept concentric to the stamper. Therefore, it does not damage the mirror surface of the mold cavity when the stamper is changed. Moreover, the stamper can be changed by far more quickly than in any conventional mold.

Figure 1 is a front elevational view, partly in section, of a mold embodying this invention;

Figure 2 is a side elevational view of a movable mold half as viewed along the line II-II of Figure 1;

Figure 3 and 4 are each a view similar to Figure 1, but showing the mold in a different position;

Figure 5 is a fragmentary enlarged view of a portion of Figure showing an outer stamper retainer and its vicinity;

Figure 6 is a fragmentary enlarged side elevational view showing a rotatable ring and particularly its slots; and

Figure 7 is a sectional view taken along the line VII-VII of Figure 6.

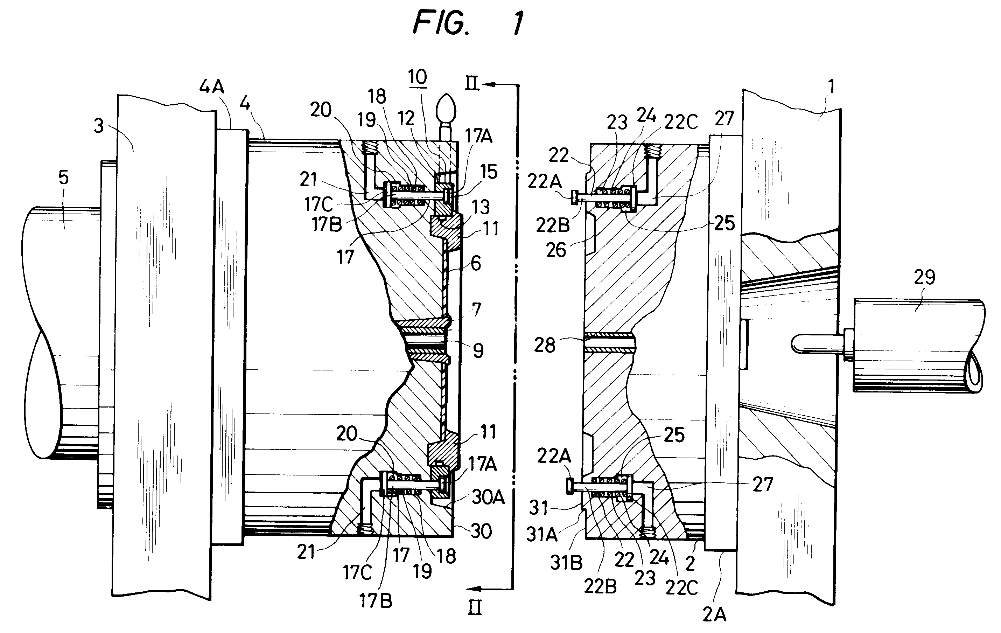

Referring to Figure 1 of the drawings, a mold embodying this invention includes a stationary mold half 2 secured by a mounting plate 2A to a stationary platen 1 a fixed on a support base of an injection molding apparatus and a movable mold half 4 secured by a mounting plate 4A to its movable platen 3. The movable platen 3 is movable with the forward to backward movement of a ram 5 extending from a known mold clamping cylinder (not shown). When the ram 5 is moved forward, a mold cavity is formed by and between the mold half 2 and the mold half 4.

The movable mold half 4 contains a stamper 6 formed from a mother stamper prepared by electrocasting with nickel or the other material and carrying information in the form of pits. The stamper 6 is held on the mirror surface of the cavity in the movable mold half 4 by an inner stamper retainer 7 and an outer stamper retainer 10. The inner stamper retainer 7 is cylindrical and holds against the mirror surface of the cavity the inner peripheral edge of the stamper 6 which is defined by its central opening. The mirror surface of the cavity is a mirror surface formed from stainless steel and having a surface roughness in the order of 1/100 to 2/100 microns. In the axial bore of the inner stamper retainer 7 are provided an ejector collar 8 for ejecting a molded disc and a punch 9 for making a central aperture through the molded disc. The ejector collar 8 and the punch 9 are reciprocally movable independently of each other therein.

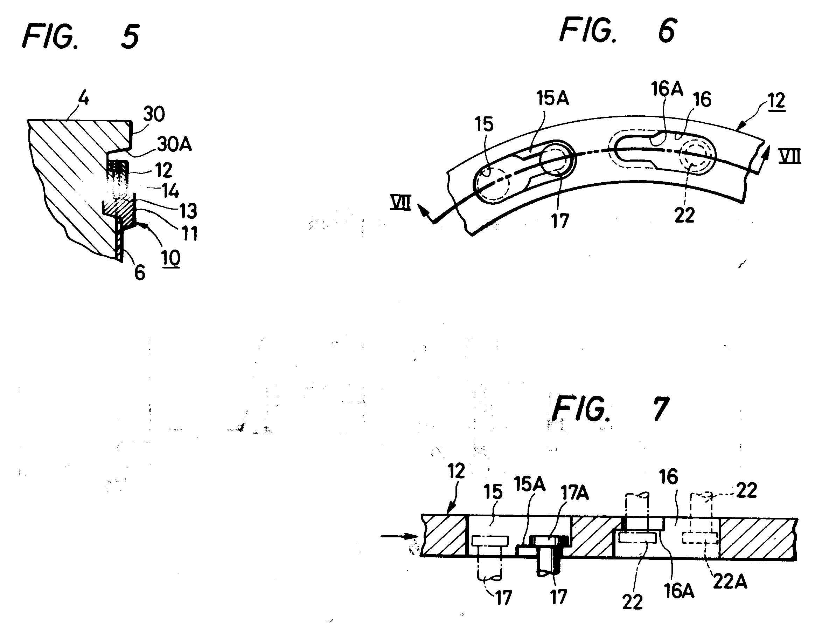

The outer stamper retainer 10 comprises an annular stamper retaining member 11 having a guide groove 13 formed in its outer peripheral surface, a rotatable ring 12 surrounding the outer periphery of the stamper retaining member 11 and a plurality of guide members 14, secured to the ring 12 and engaged in the guide groove 13, as shown in Figure 5. Each guide member 14 extends through a slit so formed as to penetrate from the outer peripheral surface of the ring 12 to the inner peripheral surface of the latter and, the end of the guide member 14 projects from the inner peripheral wall of the ring 12. The guide member 14 are screwed down to the ring 12. The ends of the guide members 14 are slidably engaged in the guide groove 13 so that the ring 12 may be ratatable about the stamper retaining member 11 without departing therefrom.

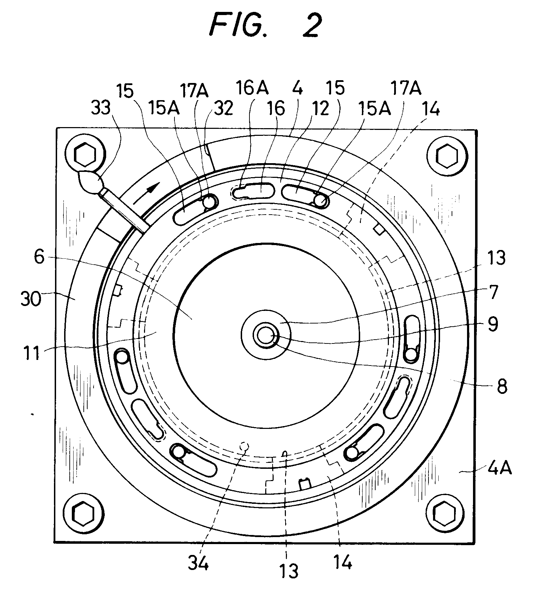

The ring 12 is provided therethrough with a plurality of arcuately elongated slots 15 and 16 extending from one lateral surface thereof to the other, as shown in Figure 2. The ring shown in the drawings has three such slots located close to one another at each of the three zones on it. The slots 15 and 16 are of two different shapes, as shown in Figures 6 and 7. Each slot 15 has a narrow portion along the arcuate direction defining a shoulder 15A. The slot 16 likewise has a narrow portion along the arcuate direction defining a shoulder 16A. The narrow portions of the slots 15 and 16 are so related to each other that the narrow portion of each slot 15 is provided adjacent to one end thereof, while the narrow portion of the slot 16 is located adjacent to the opposite end thereof. The shoulder 15A is provided at the bottom of the slot 15, and the shoulder 16A at the top of the slot 16, as viewed in Figure 7.

The movable mold half 4 is also provided with a pin 17 for supporting the outer stamper retainer 10 on the mirror surface of the mold cavity. The pin 17 has a shank portion 17B and two diametrically enlarged disc-shaped ends 17A and 17C. The end 17A of the pin 17 has a diameter which is slightly smaller than the width of the slots 15 and 16, but larger than the width of their narrow portions. The shank portion 17B has a diameter which is slightly smaller than the width of the narrow portions of the slots 15, 16. The movable mold half 4 has a hole formed in its portion facing the stationary mold half 2 for guiding the pin 17, and a spring chamber 18 and an air cylinder chamber 20 which are connected with the pin guiding hole. The pin 17 extends through the guiding hole and its rear end 17C is pressure-tightly positioned in the air cylinder chamber 20. The spring chamber 18 contains a spring 19 which holds the pin 17 slidably and normally urges it rearwardly. The front end 17A of the pin 17 is engaged with the shoulder 15a in the slot 15 of the ring 12. An air passageway 21 is connected to the air cylinder chamber 20 for supplying compressed air thereinto to move the pin 17 in the direction in which its front end 17A is disengaged from the shoulder 15A, or to the right as viewed in Figure 1.

The stationary mold half 2 is likewise provided with a pin 22 for supporting the ring 18. It is identical in construction to the pin 17 in the movable mold half 4 and has a shank portion 22B, a diametrically enlarged front end 22A having a diameter which is slightly smaller than the width of the slot 16 and a diametrically enlarged rear end 22C which serves as a piston. The mold half 2 likewise has a hole for guiding the pin 22, a spring chamber 23 and an air cylinder chamber 25. The pin 22 extends through the guiding hole and its rear end 22C is pressure-tightly positioned in the air cylinder chamber 25. The spring chamber 23 contains a spring 24 which urges the pin 22 to the right as viewed in Figure 1. An air passageway 27 is connected to the air cylinder chamber 25 for supplying compressed air to move the pin 22 to the left as viewed in Figure 1. The pin 22 is positioned in the wide portion of the slot 16 when the pin 17 is engaged in the narrow portion of the slot 15 while the mold halves 2 and 4 are in contact with each other.

The stationary mold half 2 also has an annular groove 26 in which the head of the stamper holding member 11 can be received. Reference numeral 28 designates a sprue bushing and reference numeral 29 designates a heating cylinder. The outer peripheral ring portion 30 of the movable mold half 4 has an inner peripheral tapered surface 30A and the annular projection 31 of the stationary mold half 2 has an outer peripheral tapered surface 31A with which the tapered surface 30A is engageable so that the mold half 2 and the mold half 4 may be axially aligned with each other. The contacting surfaces of the ring portion 30 on the movable mold half 4 and the projection 31 on the stationary mold half 2 define the appropriate depth of the mold cavity.

Referring to Figure 2, the ring portion 30 of the movable mold half 4 has a recess 32 and a handle 33 for rotating the ring 12 has one end secured to the ring 12 and extends radially outwardly through the recess 32. A stop pin 34 is provided for preventing the rotation of the stamper 6 in the mold cavity.

Although the pins 17 and 22 have been described as being urged in one direction by the springs 19 and 24, respectively, it is alternatively possible to use compressed air for that purpose, too.

Next, the operation is explained.

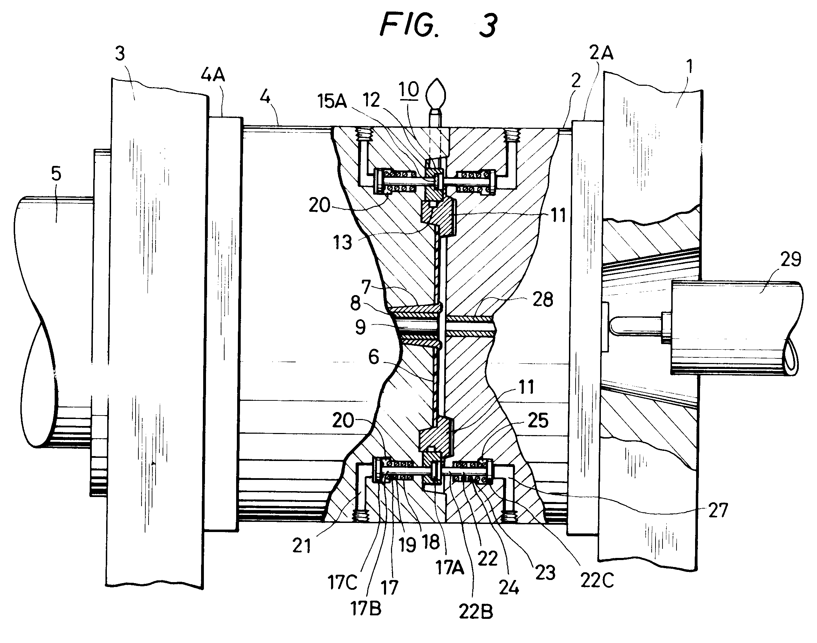

The state shown in Figure 1 is one that the stamper 6 is held by the inner and outer stamper holders 7 and 10 in the cavity of the movable mold half 4. From this state, the ram 5 is driven to move the movable mold half 4 into contact with the stationary mold half 2 as shown in Figure 3, so that the mold may be ready for the molding operation. When a predetermined number of discs have been molded, the stamper is changed to a different one. To change the stamper, first the mold is closed as shown in Figure 3. Then, compressed air is supplied through the air passageways 21 and 27 in the movable mold half 4 and the stationary mold half 2, respectively, to cause the pins 17 and 22 to project against the force of the springs 19 and 24, respectively. And, the ring 12 is rotated by the handle 33 in the direction of an arrow in Figure 2, whereupon the pin 17 is moved into the wide portion of the slot 15 of the ring 12, while the pin 22 is moved into engagement with the shoulder 16A in the slot 16. If the supply of compressed air through the air passageways 21 and 27 is, then, discontinued, the spring 24 causes the end 22A of the pin 22 to engage the shoulder 16A in the slot 16 as shown by broken line in Figure 7, whereupon the outer stamper retainer 10, as well as the ring 12, is supported on the stationary mold half 2. On the other hand, the pin 17 stays in the wide portion of the slot 15 and does not hold the ring 12 when it is retracted by the spring 19.

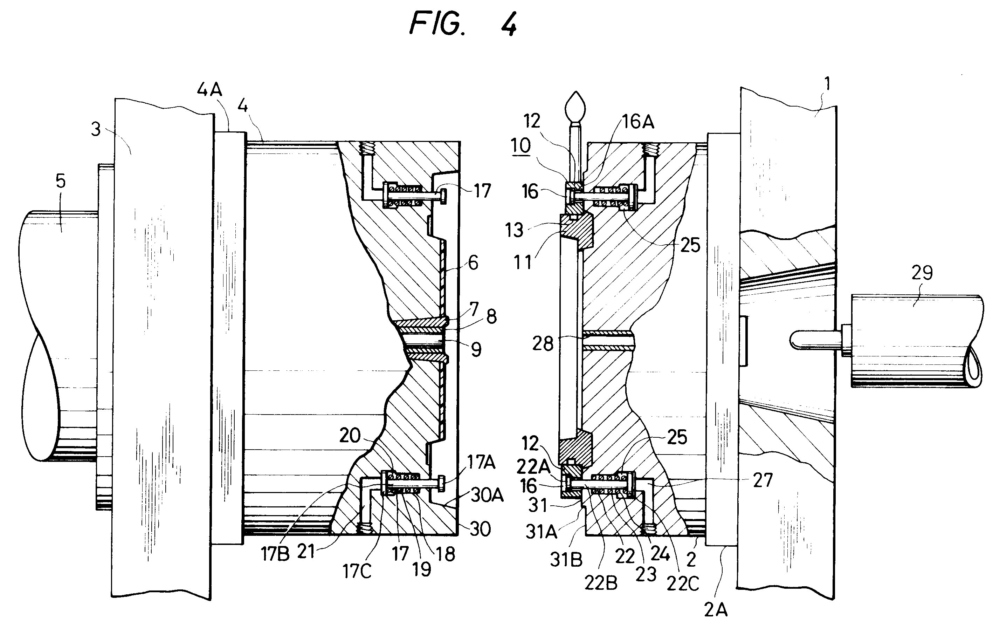

Then, the mold is opened, whereupon the outer stamper retainer 10 is left behind on the stationary mold half 2, as shown in Figure 4. The stamper 6 which has been left in the movable mold half 4 is now free from anything holding its outer periphery and can be removed easily only if the inner stamper retainer 7 is removed therefrom. A new stamper can be installed easily if the sequence of operation as hereinabove described is reversed.

## Claims

1. A mold for producing discs comprising a pair of a mold half (2) and a mold half (4) which are relatively movable to, and away from, each other, and an inner stamper retainer (8) and an outer stamper retainer (10) which are provided in one of said mold halves for retaining a stamper (6) in said one mold half, characterized by:

   a ring (12) provided rotatably on said outer stamper retainer (10);

   first supporting means (17) provided in said one mold half (4) engageably with said ring (12);

   second supporting means (22) provided in the other mold half (2) engageably with said ring (12);

   first driving means (19, 20, 17C) provided in said one mold half (2) for moving said first supporting means (17) into engagement with said ring (12), or disengagement therefrom; and

   second driving means (24, 25, 22C) provided in said other mold half for moving said second supporting means (22) into engagement with said ring (12), or disengagement therefrom.

2. A mold as claimed in claim 1, characterized in that said ring (12) has a plurality of arcuately elongated slots (15,16) which are so constructed that when said mold halves (2,4) are in contact with each other, said first supporting means (17) may be held by one of said slots (15,16), while said second supporting means (22) is not held by another slot.

3. A mold as claimed in claim 2, characterized in that one slot (15) is of different construction from said other slot (16) and has a narrow portion which defines a shoulder (15A) facing one side, while said other slot (16) has a narrow portion which defines a shoulder (16A) facing the side opposite said one side, said narrow portions (15A,16A) being so related to each other that said narrow portion of said one slot is provided adjacent to one end thereof, while said narrow portion of said other slot is located adjacent to the other end thereof.

4. A mold as claimed in claim 2, characterized in that each of said first and second supporting means (17,22) has a diametrically enlarged front end (17A,22A) and a diametrically enlarged rear end (17C, 22C) which is positioned in air cylinder chambers (20,25) provided in one of said mold halves.

5. A mold as claimed in claim 2, characterized by further including a pair of springs each urging one of said supporting means rearwardly away from the other supporting means.

## Revendications

1. Moule de fabrication de disques, comprenant un demi-moule (2) et un demi-moule (4), agencés de façon à pouvoir être rapprochés ou éloignés l'un par rapport à l'autre, et un organe intérieur de retenue de matrice (8) et un organe extérieur de retenue de matrice (10) qui sont disposés dans un premier desdits demi-moules en vue de retenir une matrice (6) dans ce demi-moule, caractérisé par

un anneau (12), monté de manière rotative sur ledit organe extérieur de retenue de matrice (10),

un premier moyen de support (17), disposé dans le susdit premier demi-moule (4) de façon à pouvoir venir au contact de l'anneau (12),

un second moyen de support (22), disposé dans le deuxième demi-moule (2) de façon à pouvoir venir au contact dudit anneau (12),

un premier moyen d'entraînement (19, 20, 17C), prévu dans le premier demi-moule (2) en vue d'amener ledit premier moyen de support (17) au contact dudit anneau (12) ou de lui faire quitter ce contact,

et un second moyen d'entraînement (24, 25, 22C) prévu dans le deuxième demi-moule en vue d'amener le second moyen de support (22) au contact dudit anneau (12) ou de lui faire quitter ce contact.

2. Moule suivant la revendication 1, caractérisé en ce que l'anneau (12) comporte plusieurs fentes allongées (15, 16), en arc de cercle, dont la structure est telle que, lorsque lesdits demi-moules (2, 4) sont au contact l'un de l'autre, ledit premier moyen de support (17) peut être maintenu par l'une desdites fentes (15, 16), tandis que ledit second moyen de support (22) n'est pas maintenu par l'autre fente.

3. Moule suivant la revendication 2, caractérisé en ce que l'une (15) des fentes a une structure différente de celle de l'autre fente (16) et comporte une partie étroite qui définit un épaulement (15A) faisant face d'un premier côté, tandis que l'autre fente (16) comporte une partie étroite qui définit un épaulement (16A) faisant face du côté opposé au premier côté, lesdites parties étroites (15A, 16A) étant disposées l'une par rapport à l'autre d'une manière telle que la partie étroite de la première fente est contiguë à l'une des extrémités de cette dernière, alors que la partie étroite de l'autre fente est contiguë à l'extrémité de cette dernière qui est située du côté opposé.

4. Moule suivant la revendication 2, caractérisé en ce que chacun des premier et second moyens de support (17, 22) comporte une extrémité avant diamétralement élargie (17A, 22A) et une extrémité arrière diamétralement élargie (17C, 22C) qui sont disposées dans des chambres de vérin pneumatique (20, 25) prévues dans le demi-moule correspondant.

5. Moule suivant la revendication 2, caractérisé en ce qu'il comprend en outre deux ressorts repoussant respectivement vers l'arrière les moyens de support, dans le sens les éloignant l'un de l'autre.

## Patentansprüche

1. Form zur Erzeugung Von Platten mit einem Paar aus einer Formhälfte (2) und einer Formhälfte (4), die relativ zueinander und voneinander weg bewegbar sind, und mit einem inneren Stempelhalter (8) und einem äußeren Stempelhalter (10), die in einer der Formhälften für die Aufnahme eines Stempels (6) in dieser einen Formhälfte vorgesehen sind, **gekennzeichnet durch:**

einen Ring (12), der drehbar an dem Außenstempelhalter (10) vorgesehen ist;

eine erste Halteeinrichtung (17), die mit dem Ring (12) in Eingriff bringbar an der einen Formhälfte (4) vorgesehen ist;

eine zweite Halteeinrichtung (22), die mit dem Ring (12) in Eingriff bringbar an der anderen Formhälfte (2) vorgesehen ist;

eine erste Antriebseinrichtung (19, 20, 17C), die in der einen Formhälfte (2) zur Bewegung der ersten Halteeinrichtung (17) in Eingriff mit dem Ring (12) und außer Eingriff mit diesem vorgesehen ist; und

eine zweite Antriebseinrichtung (24, 25, 22C), die in der anderen Formhälfte zur Bewegung der zweiten Halteeinrichtung (22) in Eingriff mit dem Ring (12) und außer Eingriff mit diesem vorgesehen ist.

2. Form nach Anspruch 1,
dadurch gekennzeichnet,
daß der Ring (12) zahlreiche bogenförmige Längsschlitze (15, 16) besitzt, die derart ausgebildet sind, daß dann, wenn die Formhälften (2, 4) sich in Kontakt miteinander befinden, die erste Halteeinrichtung (17) von einem der Schlitze (15, 16) gehalten werden kann, während die zweite Halteeinrichtung (22) nicht von dem anderen Schlitz gehalten ist.

3. Form nach Anspruch 2,
dadurch gekennzeichnet,
daß ein Schlitz (15) gegenüber dem anderen Schlitz (16) eine unterschiedliche Gestaltung aufweist und einen engen Abschnitt besitzt, der eine Schulter (15a) bildet, welche auf eine Seite weist, während der andere Schlitz (16) einen engen Abschnitt besitzt, der eine Schulter (16a) bildet, welche auf die der einen Seite gegenüberliegenden Seite weist, wobei die engen Abschnitte (15a, 16a) derart zueinander in Beziehung stehen, daß der enge Abschnitt des einen Schlitzes nahe dem einen Ende desselben vorgesehen ist, während der enge Abschnitt des anderen Schlitzes nahe des anderen Endes desselben angeordnet ist.

4. Form nach Anspruch 2,
   dadurch gekennzeichnet,
   daß die erste und die zweite Halteeinrichtung (17, 22) jeweils ein diametral vergrößertes vorderes Ende (17a, 22a) und ein diametral vergrößertes hinteres Ende (17C, 22C) aufweist, welches in Luftzylinderkammern (20, 25) angeordnet ist, die in einem der Formhälften vorgesehen sind.

5. Form nach Anspruch 2,
   gekennzeichnet durch
   zwei Federn, von denen jede eine der Halteeinrichtungen rückwärts von der anderen Halteeinrichtung weg drückt.

FIG. 1

FIG. 2

FIG. 3

EP 0 268 291 B1

FIG. 4

FIG. 6

FIG. 7

FIG. 5

11